(19) Europäisches Patentamt / European Patent Office / Office européen des brevets

(11) **EP 3 771 649 B1**

(12) **FASCICULE DE BREVET EUROPEEN**

(45) Date de publication et mention de la délivrance du brevet:
**19.01.2022   Bulletin 2022/03**

(21) Numéro de dépôt: **20177692.9**

(22) Date de dépôt: **01.06.2020**

(51) Classification Internationale des Brevets (IPC):
**B64D 45/00** *(2006.01)*      *F02M 35/09* *(2006.01)*
**B64D 13/06** *(2006.01)*      *B64D 33/02* *(2006.01)*

(52) Classification Coopérative des Brevets (CPC):
**B64D 45/00;** B64D 13/06; B64D 33/02;
B64D 2013/0651; B64D 2033/022;
B64D 2045/0085; F02M 35/09

(54) **SYSTEME D'EVALUATION DE COLMATAGE D'UN FILTRE EQUIPANT UN AERONEF, AERONEF COMPORTANT UN TEL SYSTEME D'EVALUATION ET METHODE ASSOCIEE**

SYSTEM ZUR BEWERTUNG DES VERSTOPFUNGSGRADS EINES FILTERS IN EINEM LUFTFAHRZEUG, LUFTFAHRZEUG, DAS ÜBER EIN SOLCHES BEWERTUNGSSYSTEM VERFÜGT, UND ENTSPRECHENDE METHODE

SYSTEM FOR EVALUATING THE CLOGGING OF A FILTER EQUIPPING AN AIRCRAFT, AIRCRAFT COMPRISING SUCH AN EVALUATION SYSTEM AND ASSOCIATED METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.07.2019   FR 1908671**

(43) Date de publication de la demande:
**03.02.2021   Bulletin 2021/05**

(73) Titulaire: **Airbus Helicopters**
**13725 Marignane Cedex (FR)**

(72) Inventeurs:
  • **BIGEARD, Antoine**
    **13880 VELAUX (FR)**
  • **CERQUEIRA, Stéphane**
    **13090 AIX EN PROVENCE (FR)**

(74) Mandataire: **GPI Brevets**
    **1330, rue Guillibert de la Lauzière**
    **EuroParc de Pichaury**
    **Bât B2**
    **13856 Aix en Provence Cedex 3 (FR)**

(56) Documents cités:
    **FR-A1- 2 858 664        FR-B1- 2 858 664**
    **US-A1- 2017 067 814    US-A1- 2018 312 270**

**Description**

La présente invention se rapporte au domaine des aéronefs et des systèmes d'évaluation permettant de déterminer un niveau de colmatage d'un filtre à air. Accessoirement, un tel système d'évaluation peut transmettre à un ensemble d'équipements techniques de l'aéronef, également désigné par le terme d'avionique, une information relative au niveau de colmatage de ce filtre à air.

L'invention vise plus particulièrement un système d'évaluation permettant de déterminer un niveau de colmatage d'un filtre barrière positionné dans une entrée d'air alimentant par exemple en air frais un moteur de l'aéronef ou tout autre équipement de l'aéronef tel que notamment un appareil assurant une climatisation de l'air intérieur à l'aéronef.

En outre, le niveau de colmatage d'un filtre à air est connu pour avoir des effets pénalisant sur le fonctionnement du système alimenté par l'entrée d'air. Dans le cas de l'entrée d'air d'un moteur, le colmatage du filtre à air génère une perte de charge réduisant la puissance du moteur. De telles pertes de charges peuvent alors limiter notamment les performances de vol de l'aéronef.

Il est notamment connu des documents US 2008/190177, US 2017/067769 et US 2017/067814 de réaliser des systèmes d'évaluation comportant un dispositif d'information tel un écran permettant d'indiquer à un pilote d'aéronef une information relative au niveau de colmatage d'un filtre à air positionné au niveau d'une entrée air. De tels systèmes d'évaluation comportent également un organe de mesure d'une pression différentielle $\Delta$pt entre une pression de référence et une pression mesurée en aval du filtre à air dans l'entrée d'air. Un ordinateur embarqué est configuré pour générer l'information requise à partir de la mesure de la pression différentielle $\Delta$pt, l'organe de mesure et le dispositif d'information étant connectés à l'ordinateur embarqué.

Un tel système d'évaluation mesure également une puissance d'utilisation du moteur de l'aéronef à partir de son régime de rotation courant. En fonction de cette puissance d'utilisation, le système d'évaluation peut alors modifier la valeur de seuil de la pression différentielle correspondant à un filtre à air sale.

Ainsi, un tel système d'évaluation permet uniquement de quantifier un écart courant de pression différentielle par rapport à une valeur de seuil variable correspondant à un filtre à air sale, pour un niveau de puissance donné.

Le document US 2015/344141 décrit quant à lui un filtre à air particulier équipé d'un clapet antiretour.

Enfin, le document US 2016/0347479 décrit quant à lui un système permettant de contrôler la santé d'un moteur équipé d'un filtre et d'une voie de dérivation. Le contrôle peut être réalisé lorsque la voie de dérivation est ouverte ou lorsque la voie de déviation est fermée. Cependant un tel système ne permet pas de connaitre les performances globales de l'installation complète incluant le filtre à air et n'est donc pas représentatif d'un niveau de colmatage du filtre à air.

Un tel système peut alors minimiser le niveau de puissance réel du moteur et engendrer des opérations de maintenance prématurées. Ce système peut également imposer des performances limitées et ainsi permettre par exemple à un aéronef de n'embarquer qu'un nombre limité de personnes.

Le document FR 2 858 664 se rapporte quant à lui à un système d'indication de l'état d'un filtre à air pour un véhicule en général comportant un moteur à combustion interne. Un tel système comporte notamment un dispositif d'information permettant de donner une indication de l'état de l'élément de filtre à air, par exemple un pourcentage de colmatage par rapport à une valeur prédéterminée de pression différentielle.

Une telle indication est donc uniquement fonction d'une valeur prédéterminée qui est vraisemblablement la valeur maximale admissible pour le niveau de colmatage du filtre à air.

En outre, cette valeur prédéterminée maximale de pression différentielle peut être variable en fonction du régime moteur. Cependant, la valeur minimale de pression différentielle correspondant à un filtre à air propre est quant à elle une valeur de référence constante qui peut être stockée dans une interface électronique du système. En aucun cas cette valeur de référence est décrite comme pouvant être variable.

Le document US 2018/0312270 décrit quant à lui une méthode pour compenser la mesure d'une pression différentielle pour un filtre à air en utilisant également la mesure de la vitesse de déplacement par rapport à l'air d'un aéronef.

Un tel document ne décrit cependant pas la possibilité de générer une information de niveau de colmatage d'un filtre à air qui soit à la fois précise et fiable.

La présente invention a pour objet de proposer un système d'évaluation permettant de s'affranchir des limitations précédemment décrites. En outre, le système d'évaluation conforme à l'invention permet d'indiquer une information précise et fiable relative au niveau de colmatage du filtre à air et d'éviter de limiter inutilement les performances de vol d'un aéronef. L'invention concerne donc un système d'évaluation d'un niveau de colmatage d'un filtre à air, le filtre à air équipant un aéronef muni d'au moins un moteur, le filtre à air étant positionné au niveau d'une entrée air, le système d'évaluation permettant de générer une information relative au niveau de colmatage du filtre à air et comportant :

- un premier organe de mesure effectuant une mesure de pression différentielle $\Delta$pt entre une pression de référence et une pression mesurée en aval du filtre à air dans l'entrée d'air,
- un deuxième organe de mesure permettant de déterminer une valeur de puissance d'utilisation P, Pcor du ou des moteurs et
- au moins un calculateur configuré pour générer l'information sous la dépendance de la mesure de pression différentielle Δpt et de la valeur de la puissance d'utilisation P, Pcor du ou des moteurs, le premier organe de mesure et le deuxième organe de mesure étant respectivement connectés à ou aux calculateurs.

Selon l'invention, un tel système d'évaluation est remarquable en ce que le système d'évaluation peut comporter un troisième organe de mesure effectuant une mesure de vitesse de l'aéronef par rapport à l'air environnant, le troisième organe de mesure étant connecté à chaque calculateur, le ou les calculateurs étant configurés pour déterminer une pression différentielle corrigée Δptcor de la pression différentielle Δpt en fonction de la mesure de vitesse de l'aéronef par rapport à l'air et le calculateur est configuré pour générer l'information au moyen d'un taux de colmatage TCcor, le taux de colmatage TCcor étant déterminé en fonction de la mesure de pression différentielle corrigée Δptcor, d'une première limite Δpc et d'une seconde limite Δpd prédéterminées à la puissance d'utilisation P, Pcor du ou des moteurs, la première limite Δpc étant une limite inférieure prédéterminée égale à une valeur de pression différentielle pour un filtre à air propre à la puissance d'utilisation P, Pcor du ou des moteurs, la seconde limite Δpd étant une limite supérieure prédéterminée égale à une valeur de pression différentielle pour un filtre à air sale à la puissance d'utilisation P, Pcor du ou des moteurs.

Autrement dit, le taux de colmatage TCcor est variable et dépend d'une part de la puissance d'utilisation P, Pcor du ou des moteurs et d'autre part des première limite Δpc et seconde limite Δpd prédéterminées et éventuellement stockées dans l'aéronef.

Par ailleurs, la pression différentielle Δpt étant corrigée en fonction de la vitesse de l'aéronef par rapport à l'air, un tel système d'évaluation génère un taux de colmatage TCcor avec une précision accrue .

Par ailleurs, les connexions à chaque calculateur avec le premier organe de mesure et le deuxième organe de mesure peuvent être réalisées de différentes manières.

De telles connexions peuvent en effet être réalisées au moyen d'une ou plusieurs liaisons filaires ou non filaires. Dans le cas, d'une liaison filaire, un bus de communication commun peut permettre de relier par exemple le premier organe de mesure et le deuxième organe de mesure à chaque calculateur.

Dans le cas d'une connexion sans fil, un protocole de communication sans fil, tel que par exemple un protocole de type WiFi ou Bluetooth, est alors utilisé. Un émetteur émet un signal électromagnétique dans l'air qui est ensuite capté par une antenne réceptrice distante de l'émetteur.

En outre, le premier organe de mesure et le deuxième organe de mesure sont alors connectés à une ou plusieurs entrées du ou des calculateurs. Le ou les dispositifs informateurs sont alors quant à eux connectés à une ou plusieurs sorties du ou des calculateurs.

Par ailleurs, le taux de colmatage d'un filtre à air dit sale est avantageusement choisi de manière à correspondre au taux de colmatage maximum admissible pour un filtre à air donné.

Avantageusement, le système d'évaluation peut comporter au moins un dispositif informateur permettant d'indiquer à un pilote de l'aéronef l'information relative au niveau de colmatage du filtre à air.

En outre, le dispositif informateur qui peut être par exemple formé par un écran, un voyant ou un haut parleur, permet alors de délivrer au pilote une information de colmatage dite « information » relative au niveau de colmatage du filtre à air en tenant compte des valeurs de pressions différentielles correspondant à un filtre air propre et un filtre à air sale préenregistrées. Ce dispositif informateur peut par exemple indiquer constamment l'information ou alors par exemple émettre un signal d'alarme lorsque le taux de colmatage TCcor dépasse une valeur de seuil prédéterminée.

De même que précédemment, les connexions entre chaque calculateur et le ou les dispositifs informateurs peuvent également être réalisées de différentes manières.

En pratique, le taux de colmatage TCcor peut être égal à:

$$TCcor = \frac{\Delta ptcor - \Delta pc}{\Delta pd - \Delta pc}$$

En effet, un tel taux de colmatage TCcor permet à chaque calculateur de générer une information relative au niveau de colmatage du filtre à air. L'information relative au niveau de colmatage du filtre à air est donc bien indépendante de la vitesse de l'aéronef par rapport à l'air.

Avantageusement, la première limite Δpc et la seconde limite Δpd peuvent être variables en fonction de la puissance d'utilisation P, Pcor du ou des moteurs.

En d'autres termes, la première limite Δpc et la seconde limite Δpd peuvent être associées à des fonctions numériques, les valeurs des première limite Δpc et seconde limite Δpd variant avec la puissance d'utilisation P, Pcor du ou des moteurs.

De plus, la première limite Δpc et la seconde limite Δpd peuvent être des fonctions croissantes variant avec la puissance d'utilisation P, Pcor du ou des moteurs.

Ainsi, plus la puissance d'utilisation P, Pcor du ou des moteurs est importante et plus la première limite Δpc et la seconde limite Δpd sont grandes.

En pratique, le système d'évaluation peut comporter un quatrième organe de mesure effectuant une mesure d'un paramètre atmosphérique extérieur à l'aéronef, le quatrième organe de mesure étant connecté à chaque calculateur, le ou les calculateurs étant configurés pour déterminer la puissance d'utilisation Pcor du ou des moteurs en fonction de la mesure du paramètre atmosphérique extérieur à l'aéronef.

Le paramètre atmosphérique peut par exemple être la pression atmosphérique ou la température courante. La puissance d'utilisation Pcor est alors une puissance corrigée correspondant aux conditions standards au niveau de la mer et à une température de 15 degrés Celsius (°C) ou plus généralement à la norme de l'International Standard Atmosphère, désignée par l'acronyme « ISA ».

Autrement dit, la puissance d'utilisation P peut être corrigée en fonction de paramètres extérieurs. Une telle correction permet de s'affranchir des conditions externes qui peuvent avoir un impact direct sur le taux de colmatage.

En outre, un tel quatrième organe de mesure peut également effectuer plusieurs mesures respectivement de plusieurs paramètres atmosphériques extérieurs à l'aéronef tels que par exemple la température et la pression atmosphérique.

Par exemple, le système d'évaluation peut comporter une mémoire dans laquelle la première limite $\Delta$pc et la seconde limite $\Delta$pd sont stockées, la mémoire étant connectée ou intégrée à ou aux calculateurs.

Selon un autre exemple, la valeur de chaque limite peut également être calculée à l'aide d'un circuit électronique ou équivalent et dans ce cas ces limites ne sont donc pas stockées dans une mémoire.

Par ailleurs, l'invention concerne également un aéronef remarquable en ce qu'il comporte un système d'évaluation précité.

Avantageusement, un tel aéronef peut être un giravion, et par exemple un hélicoptère, et peut comporter au moins un moteur alimenté en air frais via une entrée d'air dans laquelle un filtre à air est agencé.

Comme déjà évoqué, l'invention se rapporte également à une méthode d'évaluation d'un niveau de colmatage d'un filtre à air pour indiquer à un pilote d'aéronef une information relative au niveau de colmatage du filtre à air équipant un aéronef muni d'au moins un moteur, le filtre à air étant positionné au niveau d'une entrée air, la méthode d'évaluation permettant de générer une information relative au niveau de colmatage du filtre à air et comportant à chaque cycle d'évaluation :

- une première étape de mesure pour effectuer une mesure de pression différentielle $\Delta$pt entre une pression de référence et une pression mesurée en aval du filtre à air dans l'entrée d'air,
- une deuxième étape de mesure permettant de déterminer une valeur de la puissance d'utilisation P, Pcor du ou des moteurs, et
- une étape de calcul pour générer l'information sous la dépendance de la mesure de pression différentielle $\Delta$pt et de la valeur de la puissance d'utilisation P, Pcor du ou des moteurs.

Selon l'invention, une telle méthode d'évaluation est remarquable en ce qu'elle comporte une troisième étape de mesure pour effectuer une mesure de vitesse de l'aéronef par rapport à l'air, l'étape de calcul comportant une première sous étape de calcul pour déterminer une pression différentielle corrigée $\Delta$ptcor de la pression différentielle $\Delta$pt en fonction de la mesure de vitesse de l'aéronef par rapport à l'air, et en ce que l'étape de calcul génère l'information au moyen d'un taux de colmatage TCcor, le taux de colmatage TCcor étant déterminé en fonction de la mesure de pression différentielle corrigée $\Delta$ptcor, d'une première limite $\Delta$pc et d'une seconde limite $\Delta$pd prédéterminées à la puissance d'utilisation P, Pcor du ou des moteur, la première limite $\Delta$pc étant une limite inférieure prédéterminée égale à une valeur de pression différentielle pour un filtre à air propre à la puissance d'utilisation P, Pcor du ou des moteurs, la seconde limite $\Delta$pd étant une limite supérieure prédéterminée égale à une valeur de pression différentielle pour un filtre à air sale à la puissance d'utilisation P, Pcor du ou des moteurs.

Autrement dit, l'information relative au niveau de colmatage du filtre à air dépend d'un taux de colmatage TCcor variant avec d'une part la puissance d'utilisation P, Pcor du ou des moteurs et d'autre part les première limite $\Delta$pc et seconde limite $\Delta$pd prédéterminées.

En effet, les première limite $\Delta$pc et seconde limite $\Delta$pd varient avec la puissance d'utilisation P, Pcor et le taux de colmatage TCcor varie en fonction des première limite $\Delta$pc et seconde limite $\Delta$pd.

Une telle première sous étape de calcul permet alors de rendre indépendante la mesure de la pression différentielle $\Delta$pt de la vitesse d'avancement de l'aéronef.

En pratique, la méthode d'évaluation peut comporter une étape d'information pour indiquer au pilote d'aéronef l'information relative au niveau de colmatage du filtre à air.

Une telle étape d'information peut notamment être mise en œuvre au moyen d'un écran, d'un voyant ou encore d'un haut parleur visant à générer une information sensorielle par exemple visuelle, sonore ou encore vibratoire.

Avantageusement, le taux de colmatage TCcor peut être égal à :

$$TCcor = \frac{\Delta ptcor - \Delta pc}{\Delta pd - \Delta pc}$$

Un tel taux de colmatage TCcor peut donc être avantageusement compris entre 0% et 100% dans des conditions nominales. La valeur de 0% correspond ainsi à la valeur du taux de colmatage TCcor pour un filtre à air propre et la valeur de 100% correspond quant à elle à un taux de colmatage TCcor pour un filtre à air sale. De plus, le taux de colmatage TCcor est alors également rendu indépendant de la vitesse d'avancement de l'aéronef.

Avantageusement, la méthode d'évaluation peut comporter :

- une quatrième étape de mesure pour effectuer une mesure d'un paramètre atmosphérique extérieur à l'aéronef, et
- une seconde sous étape de calcul pour déterminer la puissance d'utilisation Pcor du ou des moteurs en fonction de la mesure du paramètre atmosphérique extérieur à l'aéronef.

Autrement dit, cette quatrième étape de mesure d'un paramètre atmosphérique permet de corriger la puissance d'utilisation de manière à ramener les mesures de la pression différentielle Δpt dans les mêmes conditions atmosphériques. En outre, un tel paramètre atmosphérique peut avantageusement correspondre à la pression atmosphérique et à la température de l'air extérieur.

En outre, la première limite Δpc et la seconde limite Δpd peuvent être déterminées par au moins une étape préliminaire de tests mise en œuvre préalablement à une utilisation de l'aéronef.

De tels tests peuvent être réalisés au sol ou en vol lors d'une phase d'essais par un pilote d'essais préalablement à une utilisation commerciale ou privée de l'aéronef par un pilote.

Ainsi, les fonctions numériques correspondant à la première limite Δpc et à la seconde limite Δpd peuvent être prédéterminées et stockées dans l'aéronef par exemple dans une mémoire avant une mission de l'aéronef et donc avant une utilisation du système et de la méthode d'évaluation. Cette première limite Δpc et cette seconde limite Δpd peuvent par ailleurs rester les mêmes pour un type de filtre à air donné associé à un moteur et un aéronef donnés.

Ainsi, la méthode d'évaluation peut avantageusement comporter une étape de stockage pour mémoriser la première limite Δpc et la seconde limite Δpd.

L'invention et ses avantages apparaîtront avec plus de détails dans le cadre de la description qui suit avec des exemples donnés à titre illustratif en référence aux figures annexées qui représentent :

[Fig 1] - la figure 1, un schéma de principe illustrant en coupe un aéronef conforme à l'invention,

[Fig 2] - la figure 2, un schéma d'un premier exemple illustratif de système d'évaluation,

[Fig 3] - la figure 3, une courbe représentative des variations de la pression différentielle en fonction de la puissance d'utilisation d'un moteur, conformément à l'invention,

[Fig 4] - la figure 4, un schéma d'un deuxième exemple de système d'évaluation conforme à l'invention,

[Fig 5] - la figure 5, un schéma d'un troisième exemple de système d'évaluation conforme à l'invention,

[Fig 6] - la figure 6, un logigramme illustrant une première variante de méthode d'évaluation, conforme à l'invention,

[Fig 7] - la figure 7, un logigramme illustrant une deuxième variante de méthode d'évaluation, conforme à l'invention, et

[Fig 8] - la figure 8, un logigramme illustrant une troisième variante de méthode d'évaluation, conforme à l'invention

Les éléments présents dans plusieurs figures distinctes peuvent être affectés d'une seule et même référence.

Comme déjà indiqué, l'invention se rapporte au domaine technique de l'aéronautique et plus particulièrement des aéronefs équipés d'un système d'évaluation pour évaluer un niveau de colmatage d'un filtre à air.

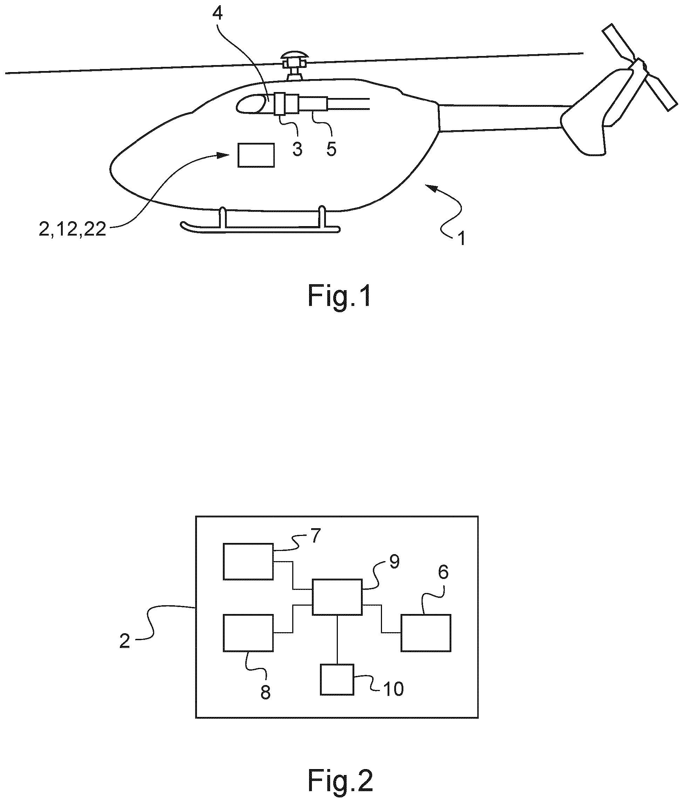

Tel que représenté à la figure 1, un tel aéronef 1 comporte ainsi un filtre à air 3 positionné à l'intérieur d'une conduite formant une entrée d'air 4 pour par exemple alimenter en air frais au moins un moteur 5.

En outre, un tel aéronef 1 comporte alors un système d'évaluation 2, 12, 22 permettant de générer une information liée au niveau de colmatage du filtre à air 3. Cette information peut alors être transmise au pilote de l'aéronef 1 par différents moyens. En effet, l'information du niveau de colmatage du filtre à air 3 peut par exemple être affichée et transmise au pilote au moyen d'un voyant ou d'un écran. L'information peut également être transmise au pilote au moyen d'un signal sonore ou d'un signal sensoriel, par exemple vibratoire.

L'information peut ainsi être une représentation d'une valeur courante du niveau de colmatage du filtre à air 3 ou encore un signal d'alarme lorsqu'une valeur de seuil prédéterminée du niveau de colmatage est dépassée.

Ainsi tel que représenté à la figure 2, un premier exemple illustratif, non conforme à l'invention, de système d'évaluation 2 comporte un premier organe de mesure 7 effectuant une mesure de pression différentielle Δpt entre une pression de référence et une pression mesurée en aval du filtre à air 3 dans l'entrée d'air 4. Une tel pression de référence peut par exemple être la pression atmosphérique de l'air situé en dehors de l'entrée d'air ou encore une pression d'entrée de l'air mesurée en amont du filtre à air 3 dans l'entrée d'air 4.

Le terme « amont » est à considérer au regard du sens de circulation de l'air du milieu extérieur vers le moteur 5 lors de son passage à l'intérieur de l'entrée d'air 4.

De plus, le premier organe de mesure 7 peut par exemple comporter un ou plusieurs capteurs de pression aptes à convertir des variations de pression en variations de tension électrique par exemple.

Par ailleurs, un tel système d'évaluation 2 comporte également un deuxième organe de mesure 8 permettant d'effectuer une mesure d'une puissance d'utilisation P, Pcor du moteur 5.

Un tel deuxième organe de mesure 8 peut par exemple comporter un ou plusieurs capteurs aptes à mesurer une vitesse de rotation et un couple moteur du moteur 5 et à convertir les variations de vitesse et de couple moteur en variations de tension électriques. Alternativement, un débit d'air circulant dans l'entrée d'air peut également être mesuré par un capteur de débit pour permettre de déterminer une puissance d'utilisation P, Pcor en fonction d'un débit d'air alimentant le moteur 5.

En outre, le système d'évaluation 2 comporte également un organe 10 permettant la mémorisation d'une première limite Δpc et d'une seconde limite Δpd sous la forme par exemple d'équations de fonctions, de tableaux de valeurs, etc... Un tel organe 10 peut notamment comporter une mémoire.

Une telle première limite Δpc correspond à une limite inférieure prédéterminée égale à une valeur de pression différentielle pour un filtre à air propre, la valeur de la première limite Δpc variant en fonction de la puissance d'utilisation P, Pcor du moteur 5.

La seconde limite Δpd correspond quant à elle à une limite supérieure prédéterminée égale à une valeur de pression différentielle pour un filtre à air sale, la valeur de la seconde limite Δpd variant en fonction de la puissance d'utilisation P, Pcor du moteur 5.

Une telle seconde limite Δpd peut être mesurée ou fixée pour correspondre à une valeur choisie dans une plage acceptable pour permettre une utilisation du moteur. La valeur dans cette plage correspond alors à un compromis entre la performance du moteur et un temps de fonctionnement admissible du moteur dans cet environnement pollué.

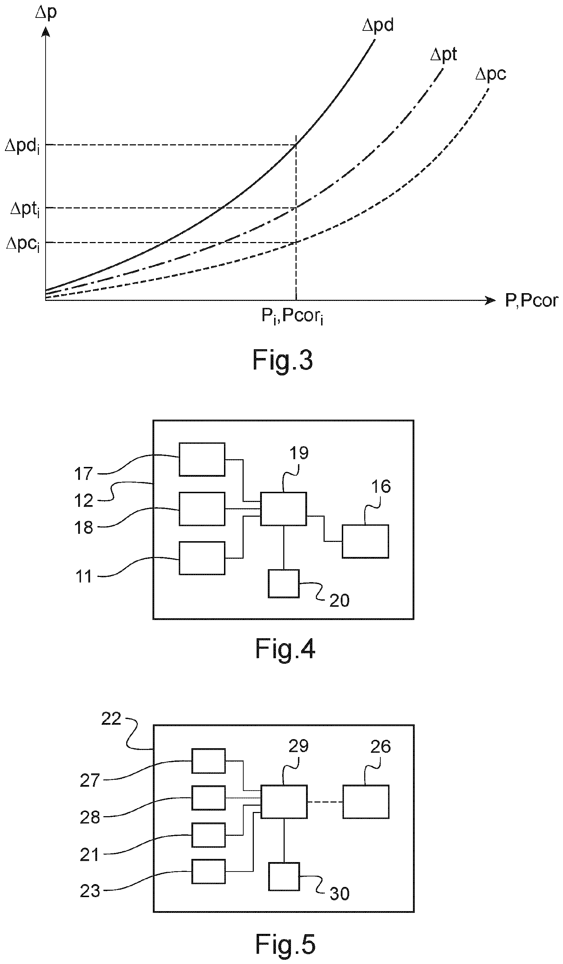

Par conséquent et tel que représenté à la figure 3, à chaque instant le moteur 5 développe une puissance d'utilisation courante $P_i$, $Pcor_i$ du moteur 5. Le calculateur 9 en déduit une valeur courante Δpc; de la première limite Δpc et une valeur courante $Δpd_i$ de la seconde limite Δpd directement ou via un paramètre variant avec la puissance d'utilisation P, Pcor du moteur 5. En outre, la mesure de pression différentielle courante $Δpt_i$ correspond à la valeur de la pression différentielle Δpt à la puissance d'utilisation courante $P_i$, $Pcor_i$ du moteur 5.

Le premier organe de mesure 7, le deuxième organe de mesure 8 et la mémoire 10 sont alors connectés par voie filaire ou non filaire à un calculateur 9 configuré pour générer l'information relative au niveau de colmatage du filtre à air 3 sous la dépendance directe de la mesure de pression différentielle Δpt et indirecte de la valeur de la puissance d'utilisation P, Pcor du moteur 5 via les première et seconde limite Δpc et Δpd.

Une fois l'information générée par le calculateur 9, cette information peut alors être transmise à un dispositif informateur 6 connectée à une sortie du calculateur 9 pour permettre d'indiquer au pilote de l'aéronef 1 le taux de colmatage du filtre à air 3. Selon un autre aspect, un tel calculateur 9 peut être configuré pour générer l'information au moyen d'un taux de colmatage TCcor. Un tel taux de colmatage TCcor est variable en fonction de la première limite Δpc, de la seconde limite Δpd prédéterminées à la puissance d'utilisation P, Pcor du moteur 5 et de la mesure de pression différentielle corrigée Δptcor.

Tel que représenté à la figure 4, un second exemple de système d'évaluation 12 comporte, selon l'invention, en plus du premier organe de mesure 17 et du deuxième organe de mesure 18, un troisième organe de mesure 11 effectuant une mesure de vitesse de l'aéronef 1 par rapport à l'air. Un tel troisième organe de mesure 11 est alors également connecté au calculateur 19 configuré pour déterminer une pression différentielle corrigée Δptcor de la pression différentielle Δpt en fonction de la mesure de vitesse de l'aéronef 1 par rapport à l'air.

Par exemple, la pression différentielle corrigée Δptcor peut être calculée en retranchant à la mesure de la pression différentielle Δpt une valeur de correction directement fonction de la vitesse de l'aéronef 1 par rapport à l'air.

Dans cas, le taux de colmatage TCcor est alors égal à:

$$TC\mathrm{cor} = \frac{\Delta \mathrm{ptcor} - \Delta \mathrm{pc}}{\Delta \mathrm{pd} - \Delta \mathrm{pc}}$$

Tel que représenté à la figure 5, un troisième exemple de système d'évaluation 22 comporte un premier organe de mesure 27, un deuxième organe de mesure 28, un troisième organe de mesure 21 effectuant une mesure de vitesse de l'aéronef 1 par rapport à l'air. En outre, un tel troisième organe de mesure 21 est optionnel et pourrait être éventuellement être supprimé, conformément au premier exemple décrit à la figure 2.

Un tel système d'évaluation 22 peut aussi comporter un quatrième organe de mesure 23 effectuant une mesure d'un paramètre atmosphérique extérieur à l'aéronef 1. Un tel quatrième organe de mesure 23 peut par exemple comporter un ou plusieurs capteurs permettant de mesurer une température et/ou une pression extérieure à l'aéronef 1.

Un tel quatrième organe de mesure 23 est alors connecté à au moins un calculateur 29 et le calculateur 29 est configuré pour déterminer la puissance d'utilisation Pcor du au moins un moteur 5 en fonction de la mesure du paramètre atmosphérique extérieur au aéronef 1.

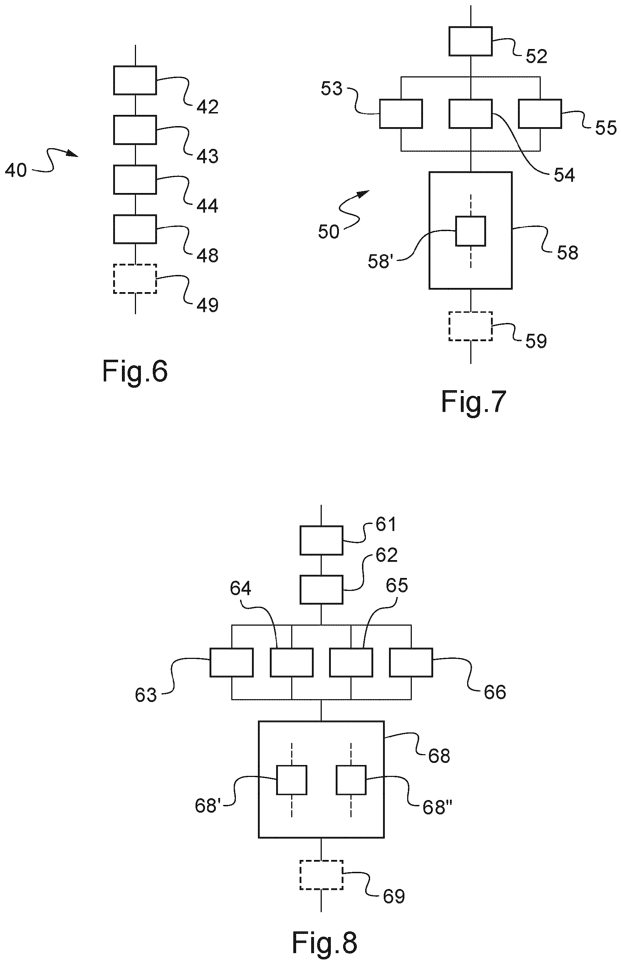

Par ailleurs, les figures 6 à 8 illustrent trois variantes de méthode d'évaluation du niveau de colmatage d'un filtre à air 3.

Selon une première variante de méthode d'évaluation 40 telle que représentée à la figure 6, la méthode d'évaluation 40 comporte une étape de stockage 42 pour mémoriser la première limite Δpc et la seconde limite Δpd dans une mémoire 10, 20, 30 qui peut être avantageusement embarquée à bord de l'aéronef 1.

La méthode d'évaluation 40 comporte ensuite une première étape de mesure 43 pour effectuer une mesure de pression différentielle Δpt entre une pression de référence et une pression mesurée en aval du filtre à air 3 puis une deuxième étape de mesure 44 pour effectuer une mesure d'une puissance d'utilisation P, Pcor du moteur 5.

Selon cette première variante de méthode d'évaluation 40, la première étape de mesure 43 et la deuxième étape de mesure 44 peuvent être mises en œuvres l'une après l'autre. Bien entendu, selon un autre exemple de réalisation non représenté, la première étape de mesure 43 et la deuxième étape de mesure 44 peuvent également être mises en œuvres simultanément en parallèle.

Une fois ces étapes de mesure 43 et 44 effectuées, la méthode d'évaluation 40 comporte alors une étape de calcul 48 pour générer l'information sous la dépendance de la mesure de pression différentielle $\Delta$pt et de la valeur de la puissance d'utilisation P, Pcor du moteur 5.

Une telle étape de calcul 48 permet alors de générer l'information au moyen du taux de colmatage TCcor, ce taux de colmatage TCcor étant variable en fonction de la première limite $\Delta$pc et de la seconde limite $\Delta$pd prédéterminées à la puissance d'utilisation P, Pcor du moteur 5.

Un tel procédé d'évaluation 40 peut éventuellement également comporter une étape d'information 49 pour transmettre au pilote d'aéronef l'information relative au niveau de colmatage du filtre à air 3.

Selon une deuxième variante de méthode d'évaluation 50 telle que représentée à la figure 7, la première étape de mesure 53 et la deuxième étape de mesure 54 peuvent être mises en œuvres en parallèle l'une de l'autre. De plus, la méthode d'évaluation 50 peut comporter une troisième étape de mesure 55 pour effectuer une mesure de vitesse de l'aéronef 1 par rapport à l'air.

Telle que représentée, cette troisième étape de mesure 55 peut également être mise en œuvre en parallèle des première et deuxième étapes de mesure 53 et 54. Bien entendu selon un autre exemple de réalisation non représenté, la troisième étape de mesure 55 peut aussi être mise en œuvre après les première et deuxième étapes de mesure 53 et 54.

Par ailleurs, la méthode d'évaluation 50 peut également comporter une étape de calcul 58 incluant une première sous étape de calcul 58'. Cette première sous étape de calcul 58' permet alors de générer l'information de colmatage pour déterminer une pression différentielle corrigée $\Delta$ptcor de la pression différentielle $\Delta$pt en fonction de la mesure de vitesse de l'aéronef 1 par rapport à l'air.

Eventuellement, une étape d'information 59 peut alors permettre d'indiquer au pilote d'aéronef l'information relative au niveau de colmatage du filtre à air 3 au moyen d'un taux de colmatage TCcor par exemple égal à :

$$TC\mathrm{cor} = \frac{\Delta\mathrm{ptcor} - \Delta\mathrm{pc}}{\Delta\mathrm{pd} - \Delta\mathrm{pc}}$$

Selon une troisième variante de méthode d'évaluation 60 telle que représentée à la figure 8, au moins une étape préliminaire de tests 61 peut être mise en œuvre préalablement au vol de l'aéronef pour déterminer la première limite $\Delta$pc et la seconde limite $\Delta$pd.

La méthode d'évaluation 60 comporte ensuite une étape de stockage 62 pour mémoriser la première limite $\Delta$pc et la seconde limite $\Delta$pd dans la mémoire 10, 20, 30.

Telle que représentée, une quatrième étape de mesure 66 peut également être mise en œuvre en parallèle des première, deuxième et troisième étapes de mesure 63, 64 et 65. Comme précédemment selon un autre exemple de réalisation non représenté, la quatrième étape de mesure 66 peut aussi être mise en œuvre après les première et deuxième étapes de mesure 63 et 64.

Une telle quatrième étape de mesure 66 permet d'effectuer une mesure d'un paramètre atmosphérique extérieur à l'aéronef 1.

Par ailleurs, la méthode d'évaluation 60 peut également comporter une étape de calcul 68 incluant une seconde sous étape de calcul 68" pour déterminer la puissance d'utilisation Pcor du moteur 5 en fonction de la mesure du paramètre atmosphérique extérieur à l'aéronef 1.

Des étapes de transmission de la mesure de pression différentielle $\Delta$pt et de la valeur de la puissance d'utilisation P, Pcor au calculateur 9, 19, 29 ne sont pas représentées mais sont bien entendues également mises en œuvre par le procédé d'évaluation 40, 50, 60.

De même, une autre étape de transmission de l'information relative au niveau de colmatage du filtre à air 3 peut être mise en œuvre préalablement à une étape d'information 49, 59, 69 éventuelle.

De telles étapes de transmissions peuvent être réalisées au moyen d'une liaison filaire ou non filaire entre d'une part les différents organes de mesure et le calculateur, et d'autre part, entre le calculateur et le dispositif informateur.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles. L'invention n'est limitée que par les revendications qui suivent.

## Revendications

1. Système d'évaluation (2, 12, 22) d'un niveau de colmatage d'un filtre à air (3), ledit filtre à air (3) équipant un aéronef (1) muni d'au moins un moteur (5), ledit filtre à air (3) étant positionné au niveau d'une entrée air (4), ledit système d'évaluation (2, 12, 22) permettant de générer une information relative au niveau de colmatage dudit filtre à air (3) et comportant :

   • un premier organe de mesure (7, 17, 27) effectuant une mesure de pression différentielle Δpt entre une pression de référence et une pression mesurée en aval dudit filtre à air (3) dans ladite entrée d'air (4),

• un deuxième organe de mesure (8, 18, 28) permettant de déterminer une valeur de la puissance d'utilisation P, Pcor dudit au moins un moteur (5), et

• au moins un calculateur (9, 19, 29) configuré pour générer ladite information sous la dépendance de ladite mesure de pression différentielle Δpt et de ladite valeur de la puissance d'utilisation P, Pcor dudit au moins un moteur (5), ledit premier organe de mesure (7, 17, 27) et ledit deuxième organe de mesure (8, 18, 28) étant respectivement connectés audit au moins un calculateur (9, 19, 29),

**caractérisé en ce que** ledit système d'évaluation (12, 22) comporte un troisième organe de mesure (11, 21) effectuant une mesure de vitesse dudit aéronef (1) par rapport à l'air environnant, ledit troisième organe de mesure (11, 21) étant connecté audit au moins un calculateur (19, 29), ledit au moins un calculateur (19, 29) étant configuré pour déterminer une pression différentielle corrigée Δptcor de ladite pression différentielle Δpt en fonction de ladite mesure de vitesse dudit aéronef (1) par rapport à l'air, et **en ce que** ledit calculateur (9, 19, 29) est configuré pour générer ladite information au moyen d'un taux de colmatage TCcor, ledit taux de colmatage TCcor étant déterminé en fonction de ladite mesure de pression différentielle corrigée Δptcor, d'une première limite Δpc et d'une seconde limite Δpd prédéterminées à ladite puissance d'utilisation P, Pcor dudit au moins un moteur (5), ladite première limite Δpc étant une limite inférieure prédéterminée égale à une valeur de pression différentielle pour un filtre à air propre à ladite puissance d'utilisation P, Pcor dudit au moins un moteur (5), ladite seconde limite Δpd étant une limite supérieure prédéterminée égale à une valeur de pression différentielle pour un filtre à air sale à ladite puissance d'utilisation P, Pcor dudit au moins un moteur (5).

2. Système d'évaluation selon la revendication 1, **caractérisé en ce que** ledit système d'évaluation (2, 12, 22) comporte au moins un dispositif informateur (6, 16, 26) permettant d'indiquer à un pilote dudit aéronef (1) ladite information relative audit niveau de colmatage dudit filtre à air (3).

3. Système d'évaluation selon l'une quelconque des revendications 1 à 2, **caractérisé en ce que** ledit taux de colmatage TCcor est égal à:

$$TCcor = \frac{\Delta ptcor - \Delta pc}{\Delta pd - \Delta pc}$$

4. Système d'évaluation selon l'une quelconque des revendications 1 à 3, **caractérisé en ce que** ladite première limite Δpc et ladite seconde limite Δpd sont variables en fonction de ladite puissance d'utilisation P, Pcor dudit au moins un moteur (5).

5. Système d'évaluation selon la revendication 4, **caractérisé en ce que** ladite première limite Δpc et ladite seconde limite Δpd sont des fonctions croissantes variant avec ladite puissance d'utilisation P, Pcor dudit au moins un moteur (5).

6. Système d'évaluation selon l'une quelconque des revendications 1 à 5, **caractérisé en ce que** ledit système d'évaluation (22) comporte un quatrième organe de mesure (23) effectuant une mesure d'un paramètre atmosphérique extérieur audit aéronef (1), ledit quatrième organe de mesure (23) étant connecté audit au moins un calculateur (29), ledit au moins un calculateur (29) étant configuré pour déterminer ladite puissance d'utilisation Pcor dudit au moins un moteur (5) en fonction de ladite mesure dudit paramètre atmosphérique extérieur audit aéronef (1).

7. Système d'évaluation selon l'une quelconque des revendications 1 à 6, **caractérisé en ce que** ledit système d'évaluation (2, 12, 22) comporte une mémoire (10, 20, 30) dans laquelle ladite première limite Δpc et ladite seconde limite Δpd sont stockées, ladite mémoire (10, 20, 30) étant connectée audit au moins un calculateur (9, 19, 29).

8. Aéronef (1) **caractérisé en ce que** ledit aéronef (1) comporte un système d'évaluation (2) selon l'une quelconque des revendications 1 à 7.

9. Méthode d'évaluation (40, 50, 60) d'un niveau de colmatage d'un filtre à air (3) pour indiquer à un pilote d'aéronef une information relative audit niveau de colmatage dudit filtre à air (3) équipant un aéronef (1) muni d'au moins un moteur (5), ledit filtre à air (3) étant positionné au niveau d'une entrée air (4), ladite méthode d'évaluation (40, 50, 60) permettant de générer une information relative au niveau de colmatage dudit filtre à air (3) et comportant à chaque cycle d'évaluation :

• une première étape de mesure (43, 53, 63) pour effectuer une mesure de pression différentielle Δpt entre une pression de référence et une pression mesurée en aval dudit filtre à air (3) dans ladite entrée d'air (4),
• une deuxième étape de mesure (44, 54, 64) permettant de déterminer une valeur de la puissance d'utilisation P, Pcor dudit au moins un moteur (5), et

• une étape de calcul (48, 58, 68) pour générer ladite information sous la dépendance de ladite mesure de pression différentielle Δpt et de ladite valeur de la puissance d'utilisation P, Pcor dudit au moins un moteur (5),

**caractérisée en ce que** ladite méthode d'évaluation (50, 60) comporte une troisième étape de mesure (55, 65) pour effectuer une mesure de vitesse dudit aéronef (1) par rapport à l'air, ladite étape de calcul (48, 58, 68) comportant une première sous étape de calcul (58', 68') pour déterminer une pression différentielle corrigée Δptcor de ladite pression différentielle Δpt en fonction de ladite mesure de vitesse dudit aéronef (1) par rapport à l'air, et

**en ce que** ladite étape de calcul (48, 58, 68) génère ladite information au moyen d'un taux de colmatage TCcor, ledit taux de colmatage TCcor étant déterminé en fonction de ladite mesure de pression différentielle corrigée Δptcor, d'une première limite Δpc et d'une seconde limite Δpd prédéterminées à ladite puissance d'utilisation P, Pcor dudit au moins moteur (5), ladite première limite Δpc étant une limite inférieure prédéterminée égale à une valeur de pression différentielle pour un filtre à air propre à ladite puissance d'utilisation P, Pcor dudit au moins un moteur (5), ladite seconde limite Δpd étant une limite supérieure prédéterminée égale à une valeur de pression différentielle pour un filtre à air sale à ladite puissance d'utilisation P, Pcor dudit au moins un moteur (5).

10. Méthode d'évaluation selon la revendication 9, **caractérisée en ce que** ladite méthode d'évaluation (40, 50, 60) comporte une étape d'information (49, 59, 69) pour indiquer, audit pilote d'aéronef, ladite information relative audit niveau de colmatage dudit filtre à air (3).

11. Méthode d'évaluation selon l'une quelconque des revendications 9 à 10, **caractérisée en ce que** ledit taux de colmatage TCcor est égal à :

$$TCcor = \frac{\Delta ptcor - \Delta pc}{\Delta pd - \Delta pc}$$

12. Méthode d'évaluation selon l'une quelconque des revendications 9 à 11, **caractérisée en ce que** ladite méthode d'évaluation (60) comporte :

• une quatrième étape de mesure (66) pour effectuer une mesure d'un paramètre atmosphérique extérieur audit aéronef (1), et

• une seconde sous étape de calcul (68") pour déterminer ladite puissance d'utilisation Pcor dudit au moins un moteur (5) en fonction de ladite mesure dudit paramètre atmosphérique extérieur audit aéronef (1).

13. Méthode d'évaluation selon l'une quelconque des revendications 9 à 12, **caractérisée en ce que** ladite première limite Δpc et ladite seconde limite Δpd sont déterminées par au moins une étape préliminaire de tests (61) mise en œuvre préalablement à une utilisation dudit aéronef (1).

14. Méthode d'évaluation selon l'une quelconque des revendications 9 à 13, **caractérisée en ce que** ladite méthode d'évaluation (40, 50, 60) comporte une étape de stockage (42, 52, 62) pour mémoriser ladite première limite Δpc et ladite seconde limite Δpd.

## Patentansprüche

1. System (2, 12, 22) zur Bewertung eines Verschmutzungsgrads eines Luftfilters (3), wobei der Luftfilter (3) ein Luftfahrzeug (1) ausstattet, das mit mindestens einem Motor (5) versehen ist, wobei der Luftfilter (3) an einem Lufteinlass (4) positioniert ist, wobei das Bewertungssystem (2, 12, 22) es ermöglicht, eine Information über den Verschmutzungsgrad des Luftfilters (3) zu erzeugen, und umfasst :

- ein erstes Messorgan (7, 17, 27), das eine Messung des Differenzdrucks Δpt zwischen einem Referenzdruck und einem stromabwärts des Luftfilters (3) in dem Lufteinlass (4) gemessenen Druck durchführt,
- ein zweites Messorgan (8, 18, 28), das es ermöglicht, einen Wert der Betriebsleistung P, Pcor des mindestens einen Motors (5) zu bestimmen, und
- mindestens einen Rechner (9, 19, 29), der konfiguriert ist, um die Information in Abhängigkeit von der Messung des Differenzdrucks Δpt und dem Wert der Betriebsleistung P, Pcor des mindestens einen Motors (5) zu erzeugen, wobei das erste Messorgan (7, 17, 27) und das zweite Messorgan (8, 18, 28) jeweils mit dem mindestens einen Rechner (9, 19, 29) verbunden sind,

**dadurch gekennzeichnet, dass** das Bewertungssystem (12, 22) ein drittes Messorgan (11, 21) umfasst, das eine Messung der Geschwindigkeit des Luftfahrzeugs (1) in Bezug auf die Umgebungsluft durchführt, wobei das dritte Messorgan (11, 21) mit dem mindestens einen Rechner (19, 29) verbunden ist, wobei der mindestens eine Rechner (19, 29) konfiguriert ist, um einen korrigierten Differenzdruck Δptcor des Differenzdrucks Δpt in Abhängigkeit von der Messung der Geschwindigkeit des Luftfahrzeugs (1) in Bezug auf die Luft zu bestimmen,

und dass der Rechner (9, 19, 29) konfiguriert ist, um die Information mittels einer Verschmutzungsrate TCcor zu erzeugen, wobei die Verschmutzungsrate TCcor in Abhängigkeit von der Messung des korrigierten Differenzdrucks Δptcor, einem vorgegebenen ersten Grenzwert Δpc und zweiten Grenzwert Δpd bei der Betriebsleistung P, Pcor des mindestens einen Motors (5) bestimmt wird, wobei der erste Grenzwert Δpc ein vorgegebener unterer Grenzwert ist, der gleich einem Differenzdruckwert für einen sauberen Luftfilter bei der Betriebsleistung P, Pcor des mindestens einen Motors (5) ist, und der zweite Grenzwert Δpd ein vorgegebener oberer Grenzwert ist, der gleich einem Differenzdruckwert für einen schmutzigen Luftfilter bei der Betriebsleistung P, Pcor des mindestens einen Motors (5) ist.

2. Bewertungssystem nach Anspruch 1, **dadurch gekennzeichnet, dass** das Bewertungssystem (2, 12, 22) mindestens eine Informationseinrichtung (6, 16, 26) umfasst, die es ermöglicht, einem Piloten des Luftfahrzeugs (1) die Information über den Grad der Verschmutzung des Luftfilters (3) anzuzeigen.

3. Bewertungssystem nach einem der Ansprüche 1 bis 2, **dadurch gekennzeichnet, dass** der Verstopfungsgrad TCcor gleich

$$TCcor = \frac{\Delta ptcor - \Delta pc}{\Delta pd - \Delta pc}$$

ist.

4. Bewertungssystem nach einem der Ansprüche 1 bis 3, **dadurch gekennzeichnet, dass** der erste Grenzwert Δpc und der zweite Grenzwert Δpd in Abhängigkeit von der Betriebsleistung P, Pcor des mindestens einen Motors (5) variabel sind.

5. Bewertungssystem nach Anspruch 4, **dadurch gekennzeichnet, dass** der erste Grenzwert Δpc und der zweite Grenzwert Δpd steigende, mit der Betriebsleistung P, Pcor des mindestens einen Motors (5) veränderliche Funktionen sind.

6. Bewertungssystem nach einem der Ansprüche 1 bis 5, **dadurch gekennzeichnet, dass** das Bewertungssystem (22) ein viertes Messorgan (23) umfasst, das eine Messung eines atmosphärischen Parameters außerhalb des Luftfahrzeugs (1) durchführt, wobei das vierte Messorgan (23) mit mindestens einem Rechner (29) verbunden ist, wobei der mindestens eine Rechner (29) konfiguriert ist, um die Betriebsleistung Pcor des mindestens einen Motors (5) in Abhängigkeit von der Messung des atmosphärischen Parameters außerhalb des Luftfahrzeugs (1) zu bestimmen.

7. Bewertungssystem nach einem der Ansprüche 1 bis 6, **dadurch gekennzeichnet, dass** das Bewertungssystem (2, 12, 22) einen Speicher (10, 20, 30) umfasst, in dem der erste Grenzwert Δpc und der zweite Grenzwert Δpd gespeichert sind, wobei der Speicher (10, 20, 30) mit dem mindestens einen Rechner (9, 19, 29) verbunden ist.

8. Luftfahrzeug (1), **dadurch gekennzeichnet, dass** das Luftfahrzeug (1) ein Bewertungssystem (2) nach einem der Ansprüche 1 bis 7 aufweist.

9. Verfahren zur Bewertung (40, 50, 60) eines Verschmutzungsgrads eines Luftfilters (3), um einem Piloten eines Luftfahrzeugs eine Information bezüglich des Verschmutzungsgrads des Luftfilters (3) anzuzeigen, mit dem ein Luftfahrzeug (1) ausgestattet ist, das mit mindestens einem Motor (5) versehen ist, wobei der Luftfilter (3) an einem Lufteinlass (4) positioniert ist, wobei das Bewertungsverfahren (40, 50, 60) es ermöglicht, eine Information bezüglich des Verschmutzungsgrads des Luftfilters (3) zu erzeugen, und in jedem Bewertungszyklus umfasst :

- einen ersten Messschritt (43, 53, 63) zum Durchführen einer Messung eines Differenzdrucks Δpt zwischen einem Referenzdruck und einem stromabwärts des Luftfilters (3) in dem Lufteinlass (4) gemessenen Druck,
- einen zweiten Messschritt (44, 54, 64), mit dem ein Wert für die Betriebsleistung P, Pcor des mindestens einen Motors (5) bestimmbar ist, und
- einen Berechnungsschritt (48, 58, 68) zum Erzeugen der Information in Abhängigkeit von der Messung des Differenzdrucks Δpt und dem Wert der Betriebsleistung P, Pcor des mindestens einen Motors (5),

**dadurch gekennzeichnet, dass** das Bewertungsverfahren (50, 60) einen dritten Messschritt (55, 65) zum Durchführen einer Geschwindigkeitsmessung des Luftfahrzeugs (1) relativ zur Luft umfasst, wobei der Berechnungsschritt (48, 58, 68) einen ersten Berechnungsunterschritt (58', 68') zum Bestimmen eines korrigierten Differenzdrucks Δptcor des Differenzdrucks Δpt als eine Funktion der Geschwindigkeitsmessung des Luftfahrzeugs (1) relativ zu Luft umfasst, und

dass der Berechnungsschritt (48, 58, 68) die Information mittels einer Verschmutzungsrate TCcor erzeugt, wobei die Verschmutzungsrate TCcor in Abhängigkeit von der Messung des korrigierten Differenzdrucks Δptcor, einem ersten Grenzwert Δpc und einem zweiten Grenzwert Δpd, die zu der Betriebsleistung P, Pcor des mindestens einen Motors (5) vorgegeben sind, bestimmt wird, wobei der erste Grenzwert Δpc ein vorgegebener unterer Grenzwert ist, der gleich einem Differenzdruckwert für einen sauberen Luftfilter bei der Betriebsleistung P, Pcor des mindestens einen Motors (5) ist, und der zweite Grenzwert Δpd ein vorgegebener oberer Grenzwert ist, der gleich einem Differenzdruckwert für einen schmutzigen Luftfilter bei der Betriebsleistung P, Pcor des mindestens einen Motors (5) ist.

10. Bewertungsverfahren nach Anspruch 9, **dadurch gekennzeichnet, dass** das Bewertungsverfahren (40, 50, 60) einen Informationsschritt (49, 59, 69) umfasst, um dem Piloten des Luftfahrzeugs die Information über den Verschmutzungsgrad des Luftfilters (3) anzuzeigen.

11. Bewertungsverfahren nach einem der Ansprüche 9 bis 10, **dadurch gekennzeichnet, dass** der Verschmutzungsgrad TCcor gleich

$$TCcor = \frac{\Delta ptcor - \Delta pc}{\Delta pd - \Delta pc}$$

ist.

12. Bewertungsverfahren nach einem der Ansprüche 9 bis 11, **dadurch gekennzeichnet, dass** das Auswertungsverfahren (60) umfasst :

- einen vierten Messschritt (66) zum Durchführen einer Messung eines atmosphärischen Parameters außerhalb des Luftfahrzeugs (1), und
- einen zweiten Berechnungsunterschritt (68") zum Bestimmen der Betriebsleistung Pcor des mindestens einen Motors (5) auf der Grundlage der Messung des atmosphärischen Parameters außerhalb des Luftfahrzeugs (1).

13. Bewertungsverfahren nach einem der Ansprüche 9 bis 12, **dadurch gekennzeichnet, dass** der erste Grenzwert Δpc und der zweite Grenzwert Δpd durch mindestens einen vorbereitenden Testschritt (61) bestimmt werden, der vor einer Nutzung des Luftfahrzeugs (1) durchgeführt wird.

14. Bewertungsverfahren nach einem der Ansprüche 9 bis 13, **dadurch gekennzeichnet, dass** das Bewertungsverfahren (40, 50, 60) einen Speicherschritt (42, 52, 62) zum Speichern des ersten Grenzwerts Δpc und des zweiten Grenzwerts Δpd umfasst.

## Claims

1. A system (2, 12, 22) for evaluating the clogging of an air filter (3), said air filter (3) equipping an aircraft (1) provided with at least one engine (5), said air filter (3) being positioned at an air intake (4), said evaluation system (2, 12, 22) enabling generation of an item of information relative to the clogging of said air filter (3) and including:

    • a first measuring component (7, 17, 27) performing a measurement of differential pressure Δpt between a reference pressure and a pressure measured upstream of said air filter (3) in said air intake (4),
    • a second measuring component (8, 18, 28) enabling determination of a value of the operating power P, Pcor of said at least one engine (5), and
    • at least one computer (9, 19, 29) configured to generate said information under the dependence of said measurement of differential pressure Δpt and of said value of the operating power P, Pcor of said at least one engine (5), said first measuring component (7, 17, 27) and said second measuring component (8, 18, 28) being respectively connected to said at least one computer (9, 19, 29),

    **characterised in that** said evaluation system (12, 22) includes a third measuring component (11, 21) performing a speed measurement of said aircraft (1) with respect to the surrounding air, said third measuring component (11, 21) being connected to said at least one computer (19, 29), said at least one computer (19, 29) being configured to determine a corrected differential pressure Δptcor of said differential pressure Δpt depending on said speed measurement of said aircraft (1) with respect to the air,
    and **in that** said computer (9, 19, 29) is configured to generate said information by means of a clogging rate TCcor, said clogging rate TCcor being determined depending on said measurement of corrected differential pressure Δptcor, on a predetermined first limit Δpc and on a predetermined second limit Δpd at said operating power P, Pcor of said at least one engine (5), said first limit Δpc being a predetermined lower limit equal to a differential pressure value for a clean air filter at said operating power P, Pcor of said at least one engine (5), said second limit Δpd being a predetermined upper limit equal to a differential pressure value for a dirty air filter at said operating power P, Pcor of said at least one engine (5).

2. Evaluation system according to claim 1, **characterised in that** said evaluation system (2, 12, 22) includes at least one informing device (6, 16, 26) enabling said information relative to said clogging of said air filter (3) to be indicated to a pilot of said aircraft (1).

3. Evaluation system according to either one of claims 1 to 2, **characterised in that** said clogging rate TCcor is equal to:

$$TCcor = \frac{\Delta ptcor - \Delta pc}{\Delta pd - \Delta pc} .$$

4. Evaluation system according to any one of claims 1 to 3, **characterised in that** said first limit Δpc and said second limit Δpd are variable depending on said operating power P, Pcor of said at least one engine (5).

5. Evaluation system according to claim 4, **characterised in that** said first limit Δpc and said second limit Δpd are increasing functions varying with said operating power P, Pcor of said at least one engine (5).

6. Evaluation system according to any one of claims 1 to 5, **characterised in that** said evaluation system (22) includes a fourth measuring component (23) performing a measurement of an atmospheric parameter outside said aircraft (1), said fourth measuring component (23) being connected to said at least one computer (29), said at least one computer (29) being configured to determine said operating power Pcor of said at least one engine (5) depending on said measurement of said atmospheric parameter outside said aircraft (1).

7. Evaluation system according to any one of claims 1 to 6, **characterised in that** said evaluation system (2, 12, 22) includes a memory (10, 20, 30), in which said first limit Δpc and said second limit Δpd are saved, said memory (10, 20, 30) being connected to said at least one computer (9, 19, 29).

8. Aircraft (1) **characterised in that** said aircraft (1) includes an evaluation system (2) according to any one of claims 1 to 7.

9. Method (40, 50, 60) for evaluating the clogging of an air filter (3) so as to indicate to an aircraft pilot an item of information relative to said clogging of said air filter (3) equipping an aircraft (1) provided with at least one engine (5), said air filter (3) being positioned at an air intake (4), said evaluation method (40, 50, 60) enabling generation of an item of information relative to the clogging of said air filter (3) and including at each evaluation cycle:

   • a first measurement step (43, 53, 63) for performing a measurement of differential pressure Δpt between a reference pressure and a pressure measured upstream of said air filter (3) in said air intake (4),
   • a second measurement step (44, 54, 64) enabling determination of a value of the operating power P, Pcor of said at least one engine (5), and
   • a computing step (48, 58, 68) for generating said information under the dependence of said measurement of differential pressure Δpt and of said value of the operating power P, Pcor of said at least one engine (5),
   **characterised in that** said evaluation method (50, 60) includes a third measuring step (55, 65) for performing a speed measurement of said aircraft (1) with respect to the air, said computing step (48, 58, 68) including a first computing substep (58', 68') for determining a corrected differential pressure Δptcor of said differential pressure Δpt depending on said speed measurement of said aircraft (1) with respect to the air, and
   and **in that** said computing step (48, 58, 68) generates said information by means of a clogging rate TCcor, said clogging rate TCcor being determined depending on said measurement of corrected differential pressure Δptcor, on a predetermined first limit Δpc and on a predetermined second limit Δpd at said operating power P, Pcor of said at least one engine (5), said first limit Δpc being a predetermined lower limit equal to a differential pressure value for a clean air filter at said operating power P, Pcor of said at least one engine (5), said second limit Δpd being a predetermined upper limit equal to a differential pressure value for a dirty air filter at said operating power P, Pcor of said at least one engine (5).

10. Evaluation method according to claim 9, **characterised in that** said evaluation method (40, 50, 60) includes an information step (49, 59, 69) for indicating, to said aircraft pilot, said information relative to said clogging of said air filter (3).

11. Evaluation method according to either one of claims 9 to 10, **characterised in that** said clogging rate TCcor is equal to:

$$TCcor = \frac{\Delta ptcor - \Delta pc}{\Delta pd - \Delta pc}$$

.

12. Evaluation method according to any one of claims 9 to 11, **characterised in that** said evaluation method (60) includes:

• a fourth measuring step (66) for performing a measurement of an atmospheric parameter outside said aircraft (1), and
• a second computing sub-step (68") for determining said operating power Pcor of said at least one engine (5) depending on said measurement of said atmospheric parameter outside said aircraft (1).

13. Evaluation method according to any one of claims 9 to 12, **characterised in that** said first limit $\Delta pc$ and said second limit $\Delta pd$ are determined by at least one preliminary step (61) of tests, implemented before using said aircraft (1).

14. Evaluation method according to any one of claims 9 to 13, **characterised in that** said evaluation method (40, 50, 60) includes a saving step (42, 52, 62) so as to save said first limit $\Delta pc$ and said second limit $\Delta pd$.

Fig.1

Fig.2

Fig.3

Fig.4

Fig.5

Fig.6

40

42

43

44

48

49

Fig.7

50

52

53

54

55

58'

58

59

Fig.8

61

62

64

65

63

66

68

68'

68''

69

**EP 3 771 649 B1**

## RÉFÉRENCES CITÉES DANS LA DESCRIPTION

**Documents brevets cités dans la description**

- US 2008190177 A
- US 2017067769 A
- US 2017067814 A
- US 2015344141 A
- US 20160347479 A
- FR 2858664
- US 20180312270 A